# EUROPEAN PATENT SPECIFICATION

(11) **EP 3 231 270 B1**
(45) Date of publication and mention of the grant of the patent: **13.03.2019**
(21) Application number: 17150781.7
(22) Date of filing: 10.01.2017
(51) Int. Cl.: A01B 69/00, A01B 79/00

(54) **METHOD FOR CONTROLLING AN AGRICULTURAL WORKING MACHINE AND OPERATOR ASSISTANCE SYSTEM**
VERFAHREN ZUR STEUERUNG EINER LANDWIRTSCHAFTLICHEN ARBEITSMASCHINE UND BEDIENERUNTERSTÜTZUNGSSYSTEM
PROCÉDÉ DE COMMANDE D'UNE MACHINE DE TRAVAIL AGRICOLE ET SYSTÈME D'AIDE D'OPÉRATEUR

(30) Priority: 13.04.2016 DE 102016106877
(43) Date of publication of application: 18.10.2017
(73) Proprietor: CLAAS E-Systems KGaA mbH & Co KG, 49201 Dissen a.T.W. (DE)
(72) Inventor: Meyer zu Helligen, Lars Peter, 32139 Spenge (DE); Weiland, Kalle, Bielefeld (DE); Behmenburg, Jan, 58730 Fröndenberg (DE); Schoch, Bernd, 33334 Gütersloh (DE)
(74) Representative: Budach, Steffen

(56) References cited:
- EP-A2- 1 847 897
- US-A1- 2005 273 253
- US-A1- 2013 304 300

## Description

The invention relates to a method for controlling an agricultural working machine according to the preamble of claim 1. Moreover, the invention relates to an operator assistance system for controlling an agricultural working machine according to claim 8. In the technical field, of agriculture it is known to automate several working and operating sequences, at least partially. This applies, for example, on one hand to the steering operation or the driving operation of an agricultural working machine such as a harvester, field chopper, tractor and the like, and on the other hand to the control of working devices connected with and carried by the agricultural working machine such as rakes, tedders, plows and the like. For these purposes, an agricultural working machine may be controlled using the named method and/or may be equipped with the named operator assistance system.
For increasing the efficiency when working a territory, the method and operator assistance system allows an automated planning of an optimized driving route of the agricultural working machine and to let the working machine automatically trail the planned driving route, at least in parts.
The planning operation includes the calculation and planning of predetermined working tracks across the territory to be worked. Typically, the majority of predetermined working tracks have a straight course, wherein the working tracks lie parallel to one another. It is therefore required to turn the agricultural working machine at the end of the present working track and to merge into a planned subsequent of the predetermined working tracks (headlands turn), wherein the respective subsequent predetermined working track is not necessarily the nearest adjacent predetermined working track. It is also conceivable that the agricultural working machine has to be steered around obstacles or security zones lying within the territory to be worked which also requires the agricultural working machine to merge from a preceding to a subsequent one of the predetermined working tracks. The sections of the driving route between two predetermined working tracks are so called merging tracks.
In other words, a planned driving route of an agricultural working machine comprises predetermined working tracks that are being trailed successively during the working of the territory, and merging tracks along which the working machine is driven between two working tracks.

DE 10 2006 019 216 A1, which the present invention is based on, discloses an operator assistance system and corresponding control method for an agricultural working machine, wherein the planning of a driving route includes the planning of a merging track for carrying out a headlands turn. The merging track can be planned based on the position, working width and turning radius of the working machine and based on the dimensions of the headlands turn area. The planning operation of the known system and method is repeated dynamically during driving of the working machine.
For the purpose of merging into a working track, different principles are known from the prior art, see for example US2013/0304300A1. For example, semi-automatic operator assistance systems are known, wherein the operator has to deactivate an automated trailing and steering system, which is used during trailing of the present working track, before a headlands turn can be carried out, and to reactivate the automated trailing and steering system before entering the next working track. However, the reactivation must be carried out within a limited area of validity ("lock-in range") assigned to the next working track. If the operator reactivates the automated trailing and steering system outside said area of validity, there is a risk that the agricultural working machine will not merge into the optimal next working track, but into a different ("wrong") working track, leading to a less efficient driving route.
Some trailing and steering systems may be provisionally switched on by the operator before the working machine reaches the area of validity, wherein the trailing and steering system will then be reactivated automatically after the working machine has reached the area of validity. However, since in this case the final reactivation process cannot be controlled by the operator, such a system bears the risk that when the automatism does not work reliably, under specific circumstances the working machine passes the area of validity without final reactivation of the trailing and steering system. Also in this case, the agricultural working machine will not merge into the optimal next working track, but into a different working track.
Moreover, fully automatic operator assistance systems are known which allow the agricultural working machine to trail not only the working tracks, but also an optimum merging track between the present and the next predetermined working track. However, such operator assistance systems are relatively complex and expensive.
It is therefore the problem of the invention to provide a method and operator assistance system for controlling an agricultural working machine, which is able to increase the efficiency when working a territory.
According to a first teaching of the invention, the above problem is solved in a method for controlling an agricultural working machine according to the preamble of claim 1 by the features of the characterizing portion of claim 1.
By providing a method for controlling an agricultural working machine, in which, during trailing of a present working track, more than one possible next working track are preselected from predetermined working tracks, which preselection is based on minimizing the length of the resulting merging track with respect to the present position and orientation of the working machine, the working machine can be driven along the shortest possible trail. This in turn leads to a saving of time and accordingly to an increase of the efficiency when working a territory.

In particular, during trailing of a present working track, two or even three possible next working tracks, are preselected from the predetermined working tracks, for which this preselection is also based on minimizing the length of the resulting merging track with respect to the present position and orientation of the working machine.

According to the method according to the invention, the preselected working track and the resulting merging track are being displayed via a man machine interface. Thereby the operator is able to identify the limited area of validity assigned to the next working track at the earliest possible and to unexcitedly choose an instant of time for (re)activating the part of the operator assistance system which automatically steers the working machine to merge into the next working track. This part of the operator assistance system (trailing and steering system) may be deactivated before a turning and merging operation and reactivated before entering the next working track.
The preselected working track with its resulting merging track may be approved, according to the embodiment of claim 2, manually by a user input via the man machine interface (semi-automatic method or trailing and steering system), e.g. by pushing a button or by slightly moving the steering wheel in the turning direction, or automatically by a planning module (fully automatic method trailing and steering system).

According to the further embodiment of claim 3, the preselection of the working track is carried out taking into account one or more working machine parameters from the group consisting of
- the current driving speed of the working machine,
- the minimum turning radius of the working machine,
- the steering angle speed of the working machine,
- the current steering angle of the working machine, and
- the current yaw rate of the working machine.

Additionally or alternatively, according to claim 4 the preselection of the working track is carried out taking into account one or more operating parameters, in particular adjustable operating parameters, from the group consisting of
- the trailing direction of the working track to be trailed, and
- the planning speed of the planning operation.
Especially in case that, during trailing of a present working track, more than one possible next working track is preselected from the predetermined working tracks, a subsequent final selection of one specific working track from the preselected working tracks can be carried out taking into account one or more of the above mentioned working machine parameters and/or operating parameters.

For example, a two-step selection is conceivable, wherein for planning the merging track, in a first step some working tracks, e.g. two working tracks, are selected from the group of predetermined working tracks as defined above, and then in a subsequent second step a specific working track is finally selected from the preselected working tracks taking into account one or more of the above mentioned working machine parameters and/or operating parameters. An advantage of that two-step selection principle is that the overall calculation time for determining the ideal next working track can be reduced, because for selecting the final working track a calculation based on the above mentioned large number of parameters does not need to be carried out for each of the large number of predetermined working tracks. According to the invention, in the first step, when a first selection from the large number of predetermined working tracks has to be carried out, the number of calculation steps is relatively small, because for the calculation operations only the parameters "present position of the working machine" and "orientation of the working machine" have to be taken into account. Then, when the second (final) selection is carried out, the number of calculation steps per working track may be larger when taking into account the above mentioned working machine parameters and/or operating parameters, but the basis for the second selection is only a relatively small number of preselected working tracks, e.g. two.
According to yet a further embodiment of the method according to the invention, the preselection, i.e. the first and/or second selection operation, is repeated dynamically, in particular in regular intervals or continuously (claim 5). Thereby the calculations, which the preselection is based on, are always up-to-date. Thus, an unexpected change in the speed or position of the agricultural working machine, e.g. due to a slippery ground surface, can be compensated in short time.

As already indicated before, the operator may manually approve the preselected working track by a user input via the man machine interface. In this case, it is conceivable that the (final) preselected working track and the (final) resulting merging track are being trailed automatically after the preselected working track has been approved (claim 6). The trailing and/or merging functionality preferably works in both driving directions (forward direction and reverse direction) and/or on many different track contours, e.g. on a straight track, a bend track, a round track. It is also conceivable to trail a merging track including a turn of more than 90°, particularly of more than 135°, more particularly of more than 180°. The merging track may also be part of or identical with a headlands turn.

According to the embodiment of claim 7, during the process of driving along the merging track to the approved working track a sequence of different working steps is executed. In this case, the described two-step selection principle is advantageous, because during trailing of the merging track the dynamic calculations need to be carried out for only a small number of already preselected working tracks. Accordingly, due to the two-step selection principle only a small number of calculations will be carried out during the execution of the sequence of different working steps, which is consuming a large amount of computing capacity. The large amount of computing capacity is, for example, used for one or more of the following steps: lifting the front lifting unit, lifting the rear lifting unit, switching off the power take-off shaft, switching off the differential lock, reducing the driving speed, shifting down, lowering the rear lifting unit, switching on the power take-off shaft, increasing the driving speed, lowering the front lifting unit, shifting up, switching on the differential lock.

According to a second teaching of the invention, the above problem is solved according to claim 8 by an operator assistance system for controlling an agricultural working machine during working of a territory to be worked, in particular for carrying out the aforementioned method, comprising a position data determining device for automatic determination of a current position of the working machine, and a driving route planning device for planning a driving route of the working machine which comprises predetermined working tracks, that are being trailed successively during the working of the territory, and merging tracks along which the working machine is driven between two working tracks, which is configured such that during trailing of the present working track more than one possible next working track are preselected from the predetermined working tracks, which preselection is based on minimizing the length of the resulting merging track with respect to the present position and orientation of the working machine and whereby the preselected working tracks and the resulting merging tracks are being displayed via a man machine interface.

In the following, the invention will be described in further detail on the basis of a drawing showing an exemplary embodiment. In the drawing
- Fig. 1: shows an agricultural working machine according to the invention during working of a territory,
- Fig. 2: shows a topview of the territory shown in Fig. 1, including several working tracks and several merging tracks,
- Fig. 3: shows the structural configuration of an operator assistance system for controlling the agricultural working machine of Fig. 1, and
- Figs. 4 to 7: show a man machine interface of the agricultural working machine of Fig. 1 displaying merging tracks based on different positions and steering angles of the working machine of Fig. 1.

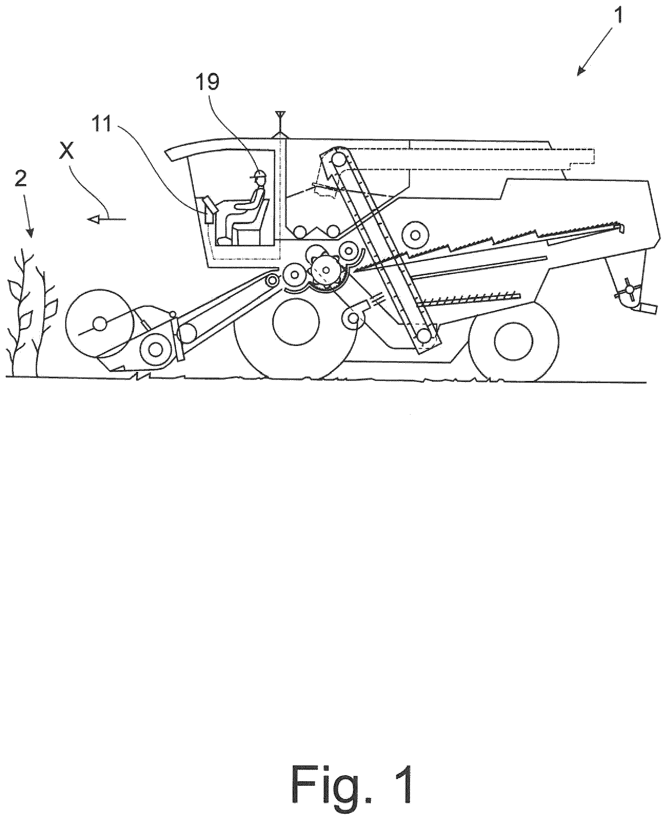

Fig. 1 shows a side view of an agricultural working machine 1 during working of a territory 2. The working machine 1 is driven by an operator 19 in a forward driving direction X. The essential operations of the working machine 1 while working the territory 2 are assisted by means of an operator assistance system 11 which functionality will be described in the following.

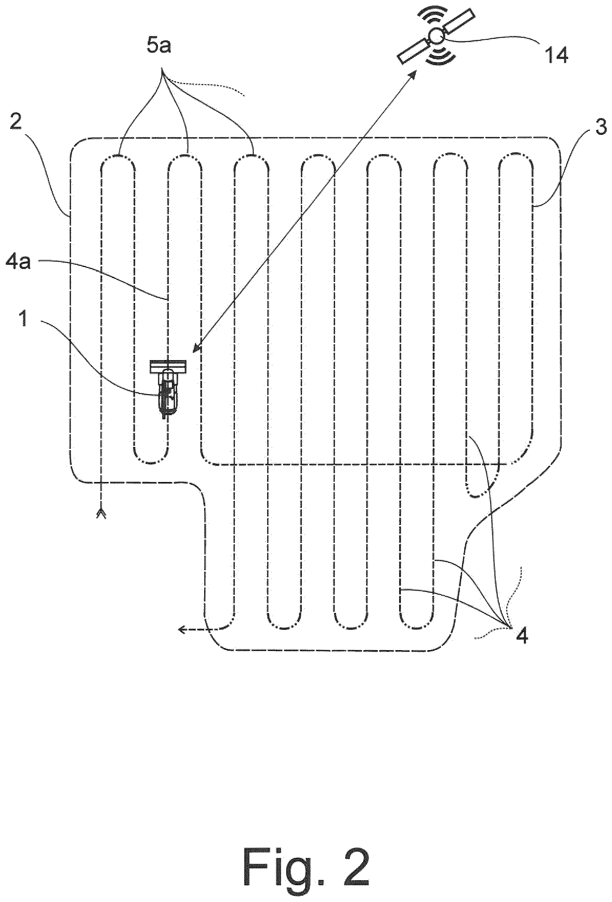

As illustrated in Fig. 2, the operator assistance system 11 of the working machine 1 has planned a driving route 3 across the territory 2. The driving route 3 comprises predetermined working tracks 4 which form straight sections of the driving route 3 and which are being trailed successively during the working of the territory 2. The predetermined working tracks 4 include a present working track 4a which is currently trailed and worked by the working machine 1. The subsequent working tracks 4 will be trailed and worked afterwards.

Moreover, the driving route 3 comprises merging tracks 5 along which the working machine 1 is driven between two working tracks 4, that is between the present working track 4a and the next working track 4b.

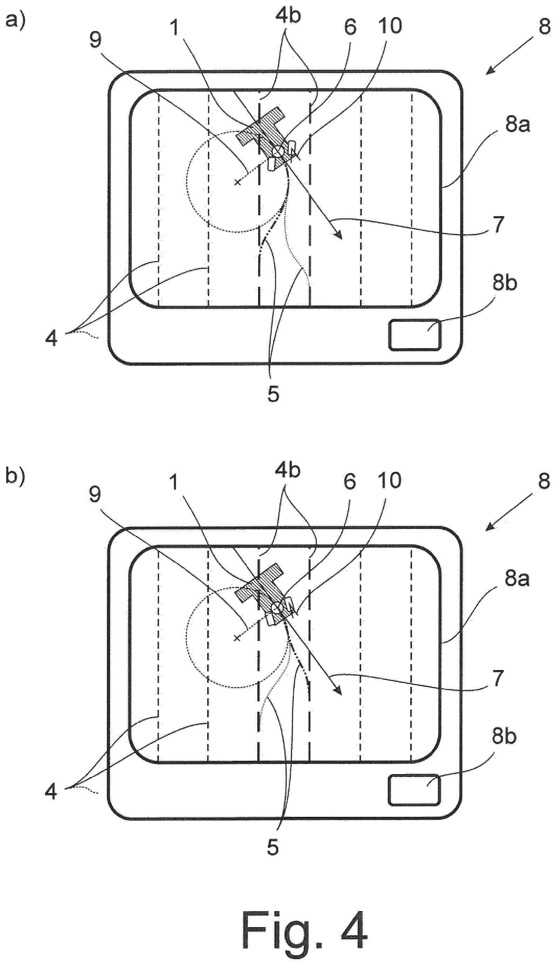

Figs. 4 to 7 illustrate how the optimal next working track 4b can be planned. According to a method for controlling the working machine 1 during working of a territory 2, which method is carried out by the operator assistance system 11, during trailing of the present working track 4a a possible next working track 4b is preselected from all predetermined working tracks 4. "Preselection" means that the operator assistance system 11 calculates and proposes one or more, e.g. two, possible next working tracks 4b, but does not approve a next working track 4b at that time or at all. In a separate step the final approvement has to be carried out manually by a user input via a man machine interface 8 of the operator assistance system 11, e.g. by pressing a button 8b of the man machine interface 8, or automatically by a planning module (not shown).

In case that the operator assistance system 11 preselects more than one possible next working track 4b, in a subsequent step the operator assistance system 11 calculates again, now based on the possible next working tracks 4b preselected in the preceding step, and then makes a final proposal for one single next working track 4b. Afterwards, in yet a further step the final approvement can be carried out by the operator 19 or automatically by the planning module. In case that the operator assistance system 11 preselects only one possible next working track 4b out of all predetermined working tracks 4, the final approvement can be carried out directly.

In the present exemplary embodiment, the preselected working track 4b and the resulting merging track 5 are being trailed automatically after the preselected working track 4b has been approved. During the process of driving along the merging track 5 to the approved working track 4b, also a sequence of different working steps can be executed, e.g. lifting the front lifting unit, lifting the rear lifting unit, switching off the power take-off shaft, switching off the differential lock, reducing the driving speed, shifting down, lowering the rear lifting unit, switching on the power take-off shaft, increasing the driving speed, lowering the front lifting unit, shifting up, switching on the differential lock.

In the following, the two-step selection principle is described in further detail. Preferably, in the first step the preselection is based on minimizing the length of the resulting merging track 5 with respect to the present position 6 and orientation 7 of the working machine 1. Preferably, in said first step two working tracks 4b are preselected.

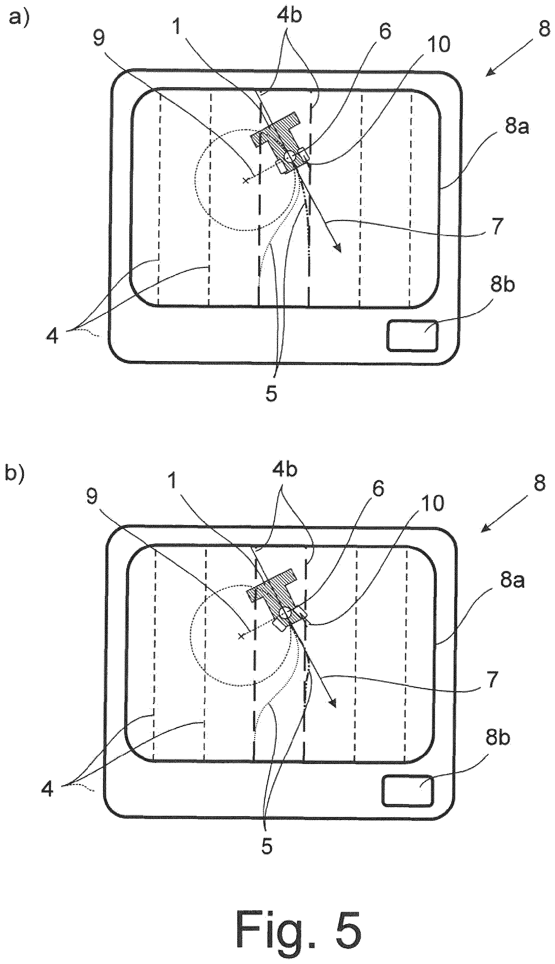

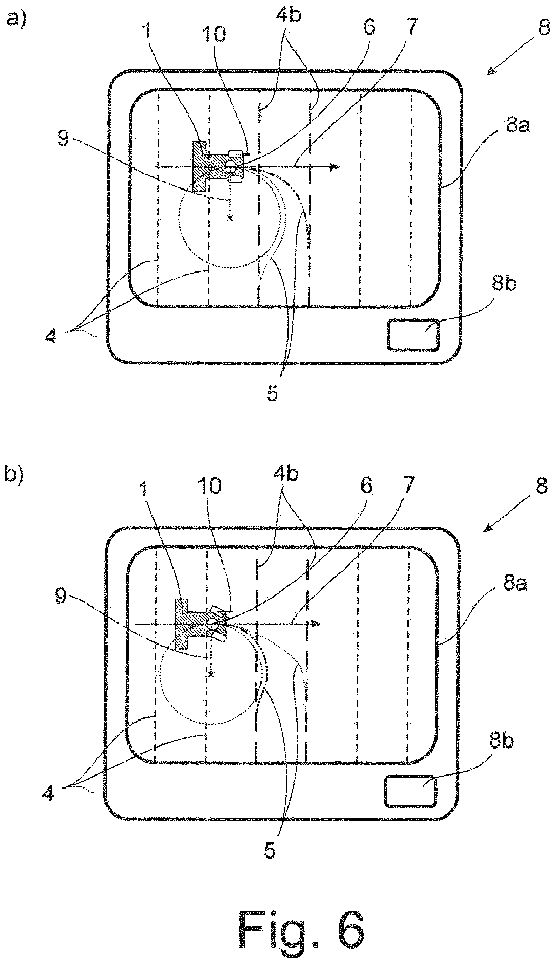

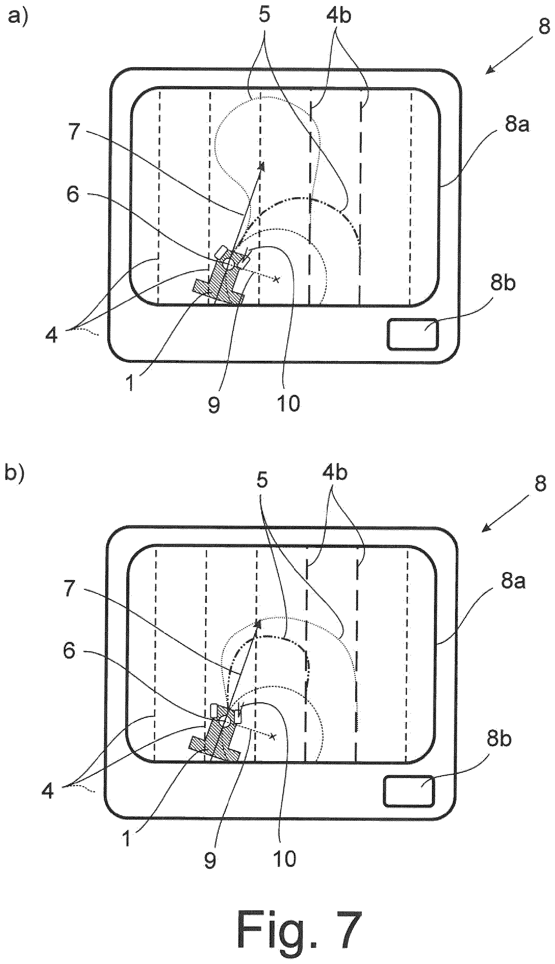

The preselected possible next working tracks 4b and the resulting merging tracks 5 are displayed via the man machine interface 8. As shown in figs. 4 to 7, the man machine interface 8 comprises a display device 8a dynamically showing the current position 6 of the working machine 1, the current orientation 7 of the working machine 1, the associated preselected (two) possible next working tracks 4b and the resulting merging tracks 5.
Preferably, in the second step the preselection of the working track 4b is carried out taking into account one or more working machine parameters from the group consisting of
- the current driving speed of the working machine 1,
- the minimum turning radius 9 of the working machine 1,
- the steering angle speed of the working machine 1,
- the current steering angle 10 of the working machine 1, and
- the current yaw rate of the working machine 1.
Additionally or alternatively, the preselection of the working track 4b is carried out taking into account one or more operating parameters, in particular adjustable operating parameters, from the group consisting of
- the trailing direction of the working track 4b to be trailed, and
- the planning speed of the planning operation.
Also, as shown in figs. 4 to 7, some or all of the above parameters can be displayed in the display device 8a, in particular, the minimum turning radius 9 of the working machine and the current steering angle 10 of the working machine 1.
When comparing figs. 4a, 4b, 5a and 5b with each other, it can be seen that the course of the proposed merging tracks 5 varies not only dependent on the position 6, but also in particular, dependent on the different steering angles 10. The orientation 7 preferably points in the planned trailing direction of the possible next working tracks 4b.
The same can be seen in figs. 6a, 6b, 7a and 7b. Here also the orientation 7 relative to the course of the working tracks 4 varies compared to figs. 4a, 4b, 5a and 5b. According to figs. 6a and 6b the working machine 1 is oriented perpendicularly to the working tracks 4. According to figs. 7a and 7b the orientation 7 is preferably opposite to the planned trailing direction of the possible next working tracks 4b.

Since the position 6 and orientation 7 may also vary due to unexpected incidents, e.g. due to a slippery ground surface, the preselection is repeated dynamically, in particular, in regular intervals or continuously. Thus, the operator 19 can always rely on the displayed preselections.

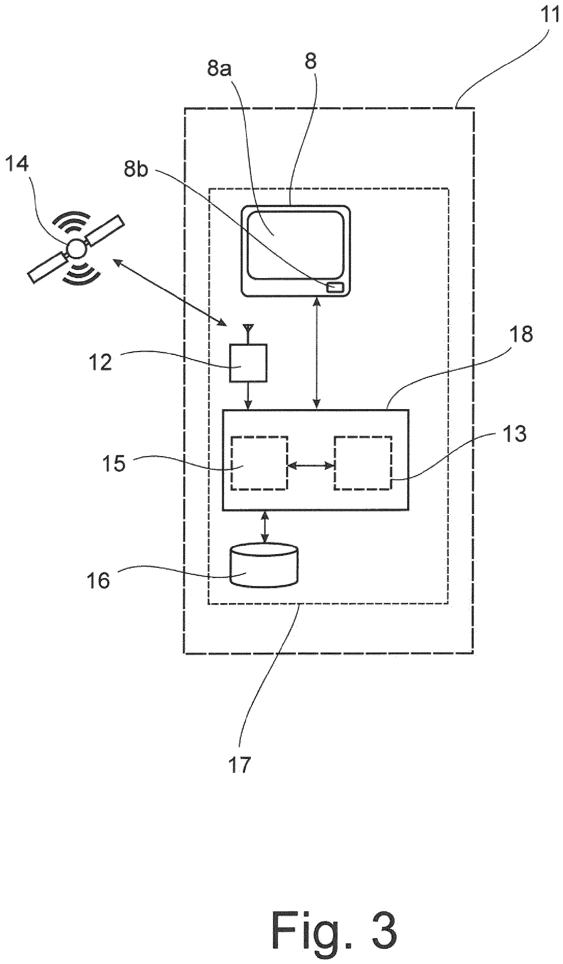

Fig. 3 schematically illustrates the structural configuration of the operator assistance system 11 for controlling the agricultural working machine 1 shown in figs. 1 and 2. The operator assistance system 11 comprises a position data determining device 12 for automatic determination of a current position 6 of the working machine 1, the position data determining device 12 cooperation with a position satellite 14.

Moreover, the operator assistance system 11 comprises a driving route planning device 13 for planning a driving route 3 of the working machine 1 which comprises predetermined working tracks 4, 4a, 4b, that are being trailed successively during the working of the territory 2, and merging tracks 5 along which the working machine 1 is driven between two working tracks 4b, which is configured such that during trailing of the present working track 4a a possible next working track 4b is preselected from the predetermined working tracks 4, 4a, 4b, for which this preselection is based on minimizing the length of the resulting merging track 5 with respect to the present position 6 and orientation 7 of the working machine 1.

The operator assistance system 11 also comprises a merging track management device 15. The driving route planning device 13 and the merging track management device 15 are controlled by a processor 18 which is connected to a memory device 16 on one hand and to the man machine interface 8 on the other hand.

Finally, Fig .3 shows that the elements 8, 12, 13, 15, 16 and 18 are part of a control system 17 which itself is part of the operator assistance system 11.

### Reference numerals

- 1: agricultural working machine
- 2: territory
- 3: driving route
- 4: predetermined working tracks
- 4a: present working track
- 4b: preselected working tracks
- 5: merging tracks
- 6: position of working machine
- 7: orientation of working machine
- 8: man machine interface
- 8a: display device
- 8b: button
- 9: minimum turning radius
- 10: steering angle
- 11: operator assistance system
- 12: position data determining device
- 13: driving route planning device
- 14: position satellite
- 15: merging track management device
- 16: memory device
- 17: control system
- 18: processor
- 19: operator
- X: forward driving direction

## Claims

1. A method for controlling an agricultural working machine (1) during working of a territory (2) to be worked, in which a driving route (3) of the working machine (1) is planned which comprises
- predetermined working tracks (4, 4a, 4b), that are being trailed successively during the working of the territory (2), and
- merging tracks (5) along which the working machine (1) is driven between two working tracks (4a, 4b),
**characterized in that,** during trailing of the present working track (4a) more than one possible next working track (4, 4a, 4b), are preselected from the predetermined working tracks (4, 4a, 4b), which preselection is based on minimizing the length of the resulting merging track (5) with respect to the present position (6) and orientation (7) of the working machine (1) and whereby the preselected working tracks (4b) and the resulting merging tracks (5) are being displayed via a man machine interface (8).

2. Method according to claim 1 or, **characterized in that** the preselected working track (4b) with its resulting merging track (5) may be approved manually by a user input via the man machine interface (8) or automatically by a planning module.

3. The method according to any one of the preceding claims, **characterized in that** the preselection of the working track (4b) is carried out taking into account one or more working machine parameters from the group consisting of
- the current driving speed of the working machine (1),
- the minimum turning radius (9) of the working machine (1),
- the steering angle speed of the working machine (1),
- the current steering angle (10) of the working machine (1), and
- the current yaw rate of the working machine (1).

4. The method according to any one of the preceding claims, **characterized in that** the preselection of the working track (4b) is carried out taking into account one or more operating parameters, in particular adjustable operating parameters, from the group consisting of
- the trailing direction of the working track (4b) to be trailed, and
- the planning speed of the planning operation.

5. The method according to any one of the preceding claims, **characterized in that** the preselection is repeated dynamically, in particular, in regular intervals or continuously.

6. The method according to any one of the preceding claims, **characterized in that** the preselected working track (4b) and the resulting merging track (5) are being trailed automatically after the preselected working track (4b) has been approved.

7. The method according to any one of the preceding claims, **characterized in that** during the process of driving along the merging track (5) to the approved working track (4b) a sequence of different working steps is executed.

8. Operator assistance system (11) for controlling an agricultural working machine (1) during working of a territory (2) to be worked, in particular for carrying out the method according to any one of the preceding claims, comprising
- a position data determining device (12) for automatic determination of a current position (6) of the working machine (1), and
- a driving route planning device (13) for planning a driving route (3) of the working machine (1) which comprises predetermined working tracks (4, 4a, 4b), that are being trailed successively during the working of the territory (2), and merging tracks (5) along which the working machine (1) is driven between two working tracks (4b), which is configured such that during trailing of the present working track (4a) more than one possible next working track (4b) are preselected from the predetermined working tracks (4, 4a, 4b), which preselection is based on minimizing the length of the resulting merging track (5) with respect to the present position (6) and orientation (7) of the working machine (1) and whereby the preselected working tracks (4b) and the resulting merging tracks (5) are being displayed via a man machine interface (8).

## Patentansprüche

1. Verfahren zur Steuerung einer landwirtschaftlichen Arbeitsmaschine (1) während des Arbeitens auf einem zu bearbeitenden Gebiet (2), wobei eine Fahrroute (3) der Arbeitsmaschine (1) geplant wird, die Folgendes umfasst
- vorgegebene Arbeitswege (4, 4a, 4b), denen während des Bearbeitens des Gebiets (2) nacheinander gefolgt wird, und
- Verbindungswege (5), entlang derer die Arbeitsmaschine (1) zwischen zwei Arbeitswegen (4a, 4b) gefahren wird,
**dadurch gekennzeichnet, dass**
während des Verfolgens des gegenwärtigen Arbeitswegs (4a) mehr als ein möglicher nächster Arbeitsweg (4, 4a, 4b) aus den vorgegebenen Arbeitswegen (4, 4a, 4b) im Voraus ausgewählt wird, wobei die Vorauswahl auf dem Minimieren der Länge des sich daraus ergebenden Verbindungswegs (5) in Bezug auf die derzeitige Position (6) und Ausrichtung (7) der Arbeitsmaschine (1) basiert und wobei die im Voraus ausgewählten Arbeitswege (4b) und die sich daraus ergebenden Verbindungswege (5) auf einer Bedienoberfläche (8) angezeigt werden.

2. Verfahren nach Anspruch 1 oder, **dadurch gekennzeichnet, dass** der im Voraus ausgewählte Arbeitsweg (4b) mit dem sich daraus ergebenden Verbindungsweg (5) manuell durch eine Bedienereingabe über die Bedienoberfläche (8) oder automatisch durch ein Planungsmodul genehmigt werden kann.

3. Verfahren nach einem der vorhergehenden Ansprüche, **dadurch gekennzeichnet, dass** die Vorauswahl des Arbeitswegs (4b) unter Berücksichtigung eines oder mehrerer Arbeitsmaschinenparameter aus der aus Folgendem bestehenden Gruppe erfolgt
- der derzeitigen Fahrgeschwindigkeit der Arbeitsmaschine (1),
- dem minimalen Umkehrradius (9) der Arbeitsmaschine (1),
- der Lenkwinkelgeschwindigkeit der Arbeitsmaschine (1),
- dem derzeitigen Lenkwinkel (10) der Arbeitsmaschine (1) und
- der derzeitigen Giergeschwindigkeit der Arbeitsmaschine (1).

4. Verfahren nach einem der vorhergehenden Ansprüche, **dadurch gekennzeichnet, dass** die Vorauswahl des Arbeitswegs (4b) unter Berücksichtigung eines oder mehrerer Betriebsparameter, insbesondere einstellbarer Betriebsparameter, aus der aus Folgendem bestehenden Gruppe erfolgt
- der Verfolgungsrichtung des verfolgten Arbeitswegs (4b) und
- der geplanten Geschwindigkeit des geplanten Betriebs.

5. Verfahren nach einem der vorhergehenden Ansprüche, **dadurch gekennzeichnet, dass** die Vorauswahl dynamisch, insbesondere in regelmäßigen Intervallen oder kontinuierlich wiederholt wird.

6. Verfahren nach einem der vorhergehenden Ansprüche, **dadurch gekennzeichnet, dass** der im Voraus ausgewählte Arbeitsweg (4b) und der sich daraus ergebende Verbindungsweg (5) nach der Genehmigung des im Voraus ausgewählten Arbeitswegs (4b) automatisch verfolgt werden.

7. Verfahren nach einem der vorhergehenden Ansprüche, **dadurch gekennzeichnet, dass** während des Prozesses des Fahrens entlang des Verbindungswegs (5) zu dem genehmigten Arbeitsweg (4b) eine Folge von unterschiedlichen Arbeitsschritten ausgeführt wird.

8. Bedienerunterstützungssystem (11) zur Steuerung einer landwirtschaftlichen Arbeitsmaschine (1) während des Arbeitens auf einem zu bearbeitenden Gebiet (2), insbesondere zur Ausführung des Verfahrens nach einem der vorhergehenden Ansprüche, das Folgendes umfasst
- eine Positionsdatenbestimmungsvorrichtung (12) zur automatischen Bestimmung einer derzeitigen Position (6) der Arbeitsmaschine (1) und
- eine Fahrroutenplanungsvorrichtung (13) zur Planung einer Fahrroute (3) der Arbeitsmaschine (1), die vorgegebene Arbeitswege (4, 4a, 4b), denen während des Bearbeitens des Gebiets (2) nacheinander gefolgt wird, und Verbindungswege (5) umfasst, entlang derer die Arbeitsmaschine (1) zwischen zwei Arbeitswegen (4b) gefahren wird, die so konfiguriert ist, dass während des Verfolgens des gegenwärtigen Arbeitswegs (4a) mehr als ein möglicher nächster Arbeitsweg (4b) aus den vorgegebenen Arbeitswegen (4, 4a, 4b) im Voraus ausgewählt wird, wobei die Vorauswahl auf dem Minimieren der Länge des sich daraus ergebenden Verbindungswegs (5) in Bezug auf die derzeitige Position (6) und Ausrichtung (7) der Arbeitsmaschine (1) basiert und wobei die im Voraus ausgewählten Arbeitswege (4b) und die sich daraus ergebenden Verbindungswege (5) auf einer Bedienoberfläche (8) angezeigt werden.

## Revendications

1. Un procédé pour commander une machine de travail agricole (1) lors du travail d'un territoire (2) à travailler, dans lequel est planifié un itinéraire de marche (3) de la machine de travail (1), lequel comprend
- des voies de travail prédéterminées (4, 4a, 4b) qui sont parcourues successivement lors du travail du territoire (2), et
- des voies de liaison (5) suivant lesquelles la machine de travail (1) est conduite entre deux voies de travail (4a, 4b),
**caractérisé en ce que**,
lors du parcours de la voie de travail instantanée (4a), plus d'une voie de travail suivante possible (4, 4a, 4b) est présélectionnée parmi les voies de travail prédéterminées (4, 4a, 4b), ladite présélection ayant pour but de minimaliser la longueur de la voie de liaison résultante (5) par rapport à la position (6) et l'orientation (7) instantanées de la machine de travail (1), et les voies de travail présélectionnées (4b) et les voies de liaison résultantes (5) étant affichées par l'intermédiaire d'une interface homme-machine (8).

2. Procédé selon la revendication 1 ou, **caractérisé en ce que** la voie de travail présélectionnée (4b) avec sa voie de liaison résultante (5) peut être validée manuellement par une entrée utilisateur par l'intermédiaire de l'interface homme-machine (8) ou automatiquement par un module de planification.

3. Le procédé selon l'une quelconque des revendications précédentes, **caractérisé en ce que** la présélection de la voie de travail (4b) est effectuée en prenant en compte un ou plusieurs paramètres de machine de travail provenant du groupe constitué de
- la vitesse de marche instantanée de la machine de travail (1),
- le rayon de giration minimal (9) de la machine de travail (1),
- la vitesse angulaire directionnelle de la machine de travail (1),
- l'angle de braquage instantané (10) de la machine de travail (1), et
- la vitesse de lacet instantanée de la machine de travail (1).

4. Le procédé selon l'une quelconque des revendications précédentes, **caractérisé en ce que** la présélection de la voie de travail (4b) est effectuée en prenant en compte un ou plusieurs paramètres de fonctionnement, en particulier des paramètres de fonctionnement réglables, provenant du groupe constitué de
- la direction de parcours de la voie de travail (4b) à parcourir, et
- la vitesse de planification de l'opération de planification.

5. Le procédé selon l'une quelconque des revendications précédentes, **caractérisé en ce que** la présélection est répétée dynamiquement, en particulier à intervalles réguliers ou en continu.

6. Le procédé selon l'une quelconque des revendications précédentes, **caractérisé en ce que** la voie de travail présélectionnée (4b) et la voie de liaison résultante (5) sont parcourues automatiquement après que la voie de travail présélectionnée (4b) a été validée.

7. Le procédé selon l'une quelconque des revendications précédentes, **caractérisé en ce que** durant le processus de marche suivant la voie de liaison (5) vers la voie de travail validée (4b), une séquence de différentes étapes de travail est exécutée.

8. Système d'assistance à opérateur (11) pour commander une machine de travail agricole (1) durant le travail d'un territoire (2) à travailler, en particulier pour mettre en oeuvre le procédé selon l'une quelconque des revendications précédentes, comprenant
- un dispositif de détermination de données de position (12) pour la détermination automatique d'une position instantanée (6) de la machine de travail (1), et
- un dispositif de planification d'itinéraire de marche (13) pour planifier un itinéraire de marche (3) de la machine de travail (1), lequel comprend des voies de travail prédéterminées (4, 4a, 4b) qui sont parcourues successivement durant le travail du territoire (2) et des voies de liaison (5) suivant lesquelles la machine de travail (1) est conduite entre deux voies de travail (4b), lequel est configuré de façon que, lors du parcours de la voie de travail instantanée (4a), plus d'une voie de travail suivante possible (4b) est présélectionnée parmi les voies de travail prédéterminées (4, 4a, 4b), ladite présélection ayant pour but de minimaliser la longueur de la voie de liaison résultante (5) par rapport à la position (6) et l'orientation (7) instantanées de la machine de travail (1), et les voies de travail présélectionnées (4b) et les voies de liaison résultantes (5) étant affichées par l'intermédiaire d'une interface homme-machine (8).
